# EUROPÄISCHE PATENTSCHRIFT

(11) **EP 1 768 808 B1**
(45) Veröffentlichungstag und Bekanntmachung des Hinweises auf die Patenterteilung: **30.04.2008**
(21) Anmeldenummer: 05761628.6
(22) Anmeldetag: 14.07.2005
(51) Int. Cl.: B23B 31/107

(54) **WERKZEUGADAPTER**
TOOL ADAPTER
ADAPTATEUR D'OUTIL

(30) Priorität: 16.07.2004 DE 202004011571 U
(43) Veröffentlichungstag der Anmeldung: 04.04.2007
(73) Patentinhaber: Flam, Mirko, 72636 Tischardt (DE)
(72) Erfinder: Flam, Mirko, 72636 Tischardt (DE)
(74) Vertreter: Fürst, Siegfried
(86) Internationale Anmeldenummer: PCT/EP2005/007650
(87) Internationale Veröffentlichungsnummer: WO 2006/008059

(56) Entgegenhaltungen:
- EP-A- 0 138 336
- DE-A1- 2 234 389
- DE-A1- 3 131 478
- DE-U1- 20 314 093
- GB-A- 2 171 937
- US-A- 4 718 799

## Beschreibung

Die vorliegende Erfindung betrifft einen Werkzeugadapter nach dem Oberbegriff des Patentanspruchs 1.

Werkzeugadapter sind aus dem Stand der Technik zur lösbaren und austauschbaren Befestigung eines Bohr-, Fräs-, Säge- oder anderen derartigen rotierenden Werkzeuges an der Werkzeugaufnahme einer rotierenden Werkzeugspindel einer Bearbeitungsmaschine bekannt. Die Werkzeugadapter weisen eine Werkzeugseite auf, an der in an sich bekannter Weise ein Werkzeugschaft eines Werkzeuges eingespannt oder festgelegt ist und eine Maschinenseite, an der die Werkzeugaufnahme befestigt ist, wobei entweder die Werkzeugaufnahme lösbar an der rotierenden Werkzeugspindel des Bearbeitungswerkzeuges befestigbar ist oder die Werkzeugaufnahme bereits einen Bestandteil dieser Werkzeugspindel bildet. Der Werkzeugadapter ist im Wesentlichen rotationssymmetrisch zur Rotationsachse des Werkzeugs ausgebildet, um die bei der Bearbeitung von Werkstücken durch hohe Drehgeschwindigkeiten auftretenden Unwuchten zu vermeiden.

Aus dem Stand der Technik sind Werkzeugadapter bekannt, bei denen in axialer Richtung zur Maschinenseite hin ein konisch zulaufender Kegelabschnitt mit einem sich zur Werkzeugseite hin daran unmittelbar anschließenden Bund mit einer Plananlage vorgesehen ist, wobei die Plananlage senkrecht zur Rotationsachse des Werkzeugadapters ausgerichtet ist. An den Bund schließt sich die Werkzeugseite mit einer an sich bekannten Vorrichtung zur Befestigung eines Werkzeuges oder Werkzeugschaftes an. Zur Verbindung des Kegelabschnitts des Werkzeugadapters mit der Werkzeugaufnahme dienen in radialer Richtung angeordnete Querbohrung in dem Werkzeugadapter sowie in der Werkzeugaufnahme, in die Spannbolzen, die über einen kegelförmigen Abschnitt verfügen, eingesetzt werden, üblicherweise über Gewindebohrungen im Werkzeugadapter sowie Außengewinde an den Spannbolzen. Der Werkzeugadapter ist damit in der Werkzeugaufnahme lösbar, austauschbar vorgesehen, und der Kegelabschnitt dient zur Führung bzw. zur Ausrichtung des Werkzeugadapters relativ zur Werkzeugaufnahme. Die Werkzeugaufnahme verfügt hierzu über eine entsprechend kegelförmig ausgebildete Aufnahmeöffnung für den Kegelabschnitt des Werkzeugadapters sowie über eine plane Anschlagfläche, an der im zusammengesetzten Zustand die Plananlage des Bundes des Werkzeugadapters anliegt und für eine exakte Ausrichtung des Werkzeugadapters relativ zur Werkzeugaufnahme bzw. zur Rotationsachse dient. Werkzeugadapter werden eingesetzt, um insbesondere Werkzeuge mit unterschiedlichen Werkzeugschaftdurchmessern an ein und derselben Werkzeugspindel einer Bearbeitungsmaschine verwenden zu können und um Werkzeuge in einfacher und kostengünstiger Weise rasch auszutauschen.

Als nachteilig hat sich dabei erwiesen, dass insbesondere bei Verwendung mehrerer Adapter in axialer Richtung hintereinander, beispielsweise um in einer Werkzeugspindel mit großem Durchmesser ein Werkzeug mit geringem Schaftdurchmesser verwenden zu können, die exakte axiale Ausrichtung der einzelnen Adapter zueinander und zur Werkzeugspindel mit den bekannten Adaptern nicht möglich ist, da durch das einseitige Einspannen mit einem einzigen Spannbolzen stets ein seitlicher Versatz in axialer Richtung auftritt und Kräfte senkrecht zur Rotationsachse wirken, so dass Unwuchten auftreten. Das bedeutet, dass bei einer Querbelastung der Adapter, auch wenn der Adapter fest in der Werkzeugaufnahme eingespannt ist, er stets einer geringfügigen Verkippung unterliegt, so dass das Bearbeitungsergebnis verschlechtert wird.

Aus der DE 203 14 093 U1 ist ein Werkzeugadapter bekannt, der zur besseren Gewährleistung einer genauen Ausrichtung des Werkzeugadapters mit einem Werkzeug auch beim Auftreten hoher Querbelastungen am Umfang des Kegelabschnitts des Werkzeugadapters zwei oder mehrere symmetrisch verteilte Querbohrungen aufweist und einen an den Kegelabschnitt sich anschließenden zylindrischen Bund.

Ausgehend von diesem Stand der Technik besteht die Aufgabe der vorliegenden Erfindung darin, einen Werkzeugadapter dahingehend zu verbessern, dass sowohl die axiale Ausrichtung des Werkzeugadapters weiter verbessert wird, insbesondere beim Auftreten hoher Querbelastungen, als auch das Einspannen des Werkzeugadapters in die Werkzeugaufnahme; zudem soll eine verbesserte Abdichtung des Adapters beim Arbeiten gegen das Eindringen von Kühlflüssigkeit erzielt werden.

Erfindungsgemäß wird diese Aufgabe durch einen Werkzeugadapter mit den Merkmalen des Patentanspruchs 1 gelöst. Vorteilhafte Ausgestaltungen der Erfindung sind Gegenstand der nachgeordneten Patentansprüche 2 bis 6.

Die neue erfindungsgemäße Ausbildung des Werkzeugadapters besteht darin, dass in einem Werkzeugadapter in einem an einen Kegelabschnitt anschließenden zylindrischen Bund vorzugsweise diametral einander gegenüberliegende Querbohrungen zur Aufnahme von Spannbolzen vorgesehen sind und der zylindrische Bund eine zu einem werkzeugseitigen Aufnahmebereich zeigende Plananlage aufweist. Dadurch, dass der zylindrische Bund, der die bei der Bearbeitung entstehenden Querkräfte aufnimmt, nach rechts zur Werkzeugseite hin verlagert wurde, können höhere Drehmomente übertragen werden, so dass Querbelastungen des Werkzeugadapters, die durch auftretende Unwuchten hervorgerufen werden können, auch wenn der Adapter fest in der Werkzeugaufnahme eingespannt ist, besser ausgeglichen werden können, und die axiale Ausrichtung des Adapters mit dem darin angeordneten Werkzeug beim Auftreten hoher Querbelastungen weiter verbessert wird, durch die Aufnahme der Querkräfte durch die in dem zylindrischen Bund in den Querbohrungen angeordneten Spannbolzen. Das betrifft insbesondere Kräfte; die senkrecht zur Rotationsachse wirken, beispielsweise auftretende Kräfte beim Fräsen.

Vorteilhaft ist vorgesehen, dass mindestens zwei Querbohrungen symmetrisch am Umfang des zylindrischen Bundes des Werkzeugadapters angeordnet sind, die in der Werkzeugaufnahme jeweils eine Gewindebohrung und eine jeweils daran anschließende, in den zylindrischen Bund ausgebildete Kegelbohrung aufweisen, zur Aufnahme der Spannbolzen, um eine bessere Befestigung des Werkzeugadapters in der Werkzeugaufnahme zu erhalten. Die Spannbolzen weisen dazu vorzugsweise einen Gewindeansatz zur Befestigung in der Werkzeugaufnahme und einen Kegelabschnitt auf, der zur Führung und Ausrichtung des Werkzeugadapters in der Werkzeugaufnahme dient.

Eine bevorzugte Ausführungsform wird darin gesehen, dass die Werkzeugaufnahme des Werkzeugadapters werkzeugseitig zum Aufnahmebereich hin eine Plananlage aufweist, die mit einem Hohlschliff ausgebildet ist. Dadurch wird eine bessere Abdichtung gegenüber einer Kühlflüssigkeit erreicht, um gegenüber bekannten Anordnungen die bei einer Abdichtung gegenüber der Kühlflüssigkeit auftretende Kapillarwirkung bei dem über die zentrale axiale Bohrung zugeführten Kühlmittel im Innern des Werkzeugadapters auszuschalten.

Vorteilhaft ist zudem vorgesehen, dass die Achsen der Kegelabschnitte der Spannbolzen zu den Achsen der Kegelbohrungen im zylindrischen Bund des Werkzeugadapters bei Anlage der Plananlage des zylindrischen Bundes an der planen Anschlagfläche der Werkzeugaufnahme einen Versatz aufweisen.

Eine weitere vorteilhafte Ausführungsform besteht darin, dass zwischen der Übergangsfläche der Werkzeugaufnahme zu dem zylindrischen Bund des Werkzeugadapters ein Spalt vorgesehen ist, um die Anlage der Plananlage an der planen Anschlagfläche der Werkzeugaufnahme zu gewährleisten und damit Überbestimmtheiten zu vermeiden.

Ein wesentlicher Vorteil der vorliegenden Erfindung besteht darin, dass durch die neue Gestaltung der Werkzeugseite des Werkzeugadapters eine verbesserte und präzisere axiale Ausrichtung eines Werkzeugadapters bzw. des daran angeordneten Werkzeuges erreicht wird. Durch die verbesserte Gestaltung des Werkzeugadapters können hohe Querbelastungen bei der Bearbeitung aufgenommen werden. Weiterhin wird durch die ebenfalls neue Anordnung der Plananlage der Werkzeugaufnahme zum werkzeugseitigen Aufnahmebereich hin eine bessere Abdichtung der Werkzeugaufnahme gegenüber der zur Bearbeitung notwendigen Kühlflüssigkeit erhalten. Ein weiterer Vorteil des neuen Werkzeugadapters besteht darin, dass er für den Einsatz mit sehr hohen Drehzahlen geeignet ist, insbesondere auch dadurch, weil durch die verbesserte Aufnahme von auftretenden Querkräften nur noch minimale Unwuchten bei diesem Werkzeugadapter auftreten.

Ein Ausführungsbeispiel eines erfindungsgemäßen Werkzeugadapters ist in den Zeichnungen schematisch dargestellt und im Folgenden näher beschrieben.

Es zeigen:
- **Figur 1**: einen erfindungsgemäßen Werkzeugadapter in Schnittdarstellung
und
- **Figur 2**: ein Detail "x" aus Fig. 1, die Anordnung eines Spannbolzens im Werkzeugadapter im Schnitt.

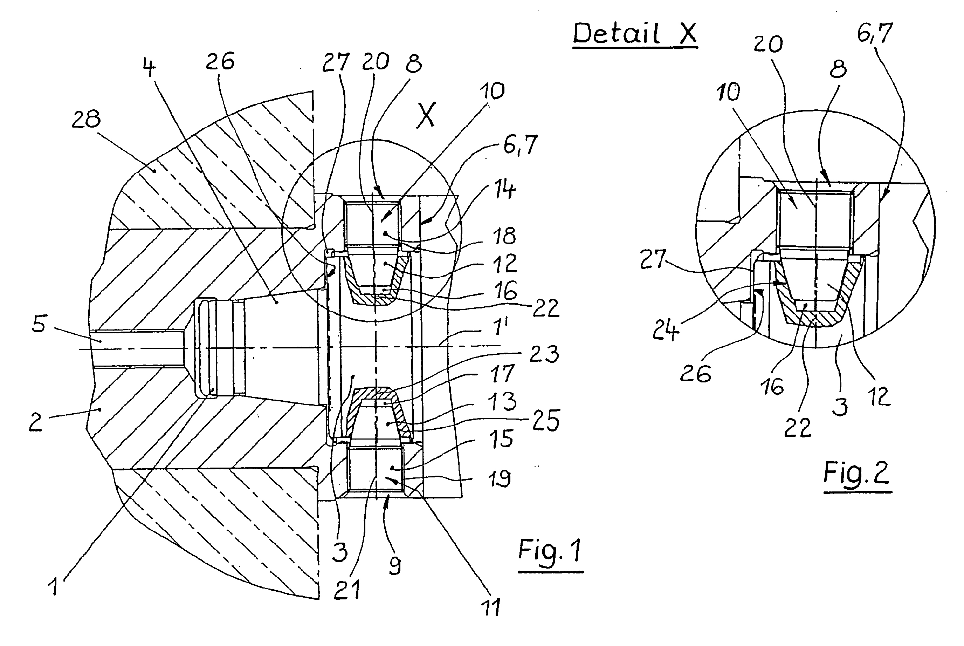

Figur 1 zeigt, in einem so genannten Längsschnitt, einen symmetrisch zu einer Rotationsachse 1' ausgebildeten Werkzeugadapter 1 zur Befestigung in einer maschinenseitig vorgesehenen Werkzeugaufnahme 2, bestehend aus einem Kegelabschnitt 4 und einem auf der Werkzeugseite vorgesehenen zylindrischen Bund 3 und einer Plananlage 7, die werkzeugseitig an dem zylindrischen Bund 3 ausgebildet und senkrecht zur Rotationsachse 1' ausgerichtet ist sowie - in eingespanntem Zustand- an einer planen Anschlagfläche 6 der Werkzeugaufnahme 2 anliegt. Die Plananlage 7 oder die Anschlagfläche (6) weist vorzugsweise einen Hohlschliff auf, d. h. sie ist geringfügig - vorzugsweise im tausendstel mm-Bereich - gegenüber der Senkrechten zur Rotationsachse geneigt, um eine bessere Abdichtung bezüglich der während des Arbeitens auf das Werkstück bzw. das Werkzeug aufgegebenen Kühlflüssigkeit bzw. dem entstehenden Kühlflüssigkeits-Nebel zu erreichen.

Der sich an den zylindrischen Bund 3 des Werkzeugadapters 1 zur Maschinenseite hin anschließende Kegelabschnitt 4 dient zur Führung und Ausrichtung des Werkzeugadapters 1 bezüglich der Werkzeugaufnahme 2. Zur Befestigung des Werkzeugadapters 1 in der Werkzeugaufnahme 2 sind in Querbohrungen 8, 9, die bis in die Umfangsfläche des zylindrischen Bundes 3 des Werkzeugadapters 1 hineinreichen, jeweils Spannbolzen 10, 11 vorgesehen, wobei selbige 10, 11 vorzugsweise diametral einander gegenüberliegend im zylindrischen Bund 3 angeordnet sind. Die Querbohrungen 8, 9 bestehen jeweils aus einer Gewindebohrung 18, 19 in der Werkzeugaufnahme 2 und einer Kegelbohrung 16, 17 im zylindrischen Bund 3.

Die Spannbolzen 10, 11 werden mit ihren Gewindeansätzen 14, 15 in die Gewindebohrungen 18, 19 der Werkzeugaufnahme 2 eingeschraubt und setzen sich dann mit ihren Kegelabschnitten 12, 13 in die Kegelbohrungen 16, 17 im zylindrischen Bund 3 des Werkzeugadapters 1 spannend ein, um den Werkzeugadapter 1 lösbar an der Werkzeugaufnahme 2 festzulegen bzw. zu verspannen. Beim Einschrauben der Spannbolzen 10, 11 in die Werkzeugaufnahme 2 ziehen sich die Kegelabschnitte 12, 13 der Spannbolzen 10, 11 in die entsprechenden Kegelbohrungen 16, 17 im zylindrischen Bund 3 des Werkzeugadapters 1. Durch einen axial gerichteten Versatz der Achsen 20, 21 der Kegelabschnitte 12, 13 der Spannbolzen 10, 11 zu den Achsen 22, 23 der Kegelbohrungen 16, 17 im zylindrischen Bund 3 des Werkzeugadapters 1 liegen bei Anlage der Plananlage 7 des zylindrischen Bundes 3 an der planen Anschlagfläche 6 der Werkzeugaufnahme 2 die Kegelwandungen 24, 25 der Kegelabschnitte 12, 13 der Spannbolzen 10, 11 einseitig an und der Werkzeugadapter 1 wird mit seiner Plananlage 7 gegen die plane Anschlagfläche 6 der Werkzeugaufnahme 2 gezogen, so dass damit eine definierte und sichere Lage des Werkzeugadapters 1 zur Werkzeugaufnahme 2, die in einer Arbeitsspindel einer Werkzeugmaschine - vorzugsweise lösbar - befestigt ist, erhalten wird. Der zylindrische Bund 3 darf mit seiner der Plananlage 7 abgewandten Planfläche 26 nicht anliegen, sondern es muss ein Spalt 27 zwischen dieser Planfläche 26 und einer korrespondierenden inneren Fläche der Werkzeugaufnahme 2 vorhanden sein, damit keine Überbestimmtheit vorliegt und somit immer nur die plane Anschlagfläche 6 und die Plananlage 7 aneinander anliegen.

Die Werkzeugaufnahme 2 weist weiterhin eine zentrale Bohrung 5 zur Zuführung eines Kühlmittels zum Werkzeug hin auf; wobei hier in den Zeichnungen die im Werkzeugadapter 1 vorgesehenen, an sich bekannten Kanäle zum Hindurchführen des Kühlmittels nicht gezeichnet sind.

Die Erfindung ist nicht auf das gezeigte Ausführungsbeispiel beschränkt, sondern im Rahmen des Offenbarten vielfach variabel.

### Bezugszeichenliste

- 1: Werkzeugadapter
- 1': Rotationsachse von Pos. 1
- 2: Werkzeugaufnahme
- 3: zylindrischer Bund des Werkzeugadapters (Pos. 1)
- 4: Kegelabschnitt des Werkzeugadapters (Pos. 1)
- 5: zentrale Bohrung in der Werkzeugaufnahme (Pos. 2)
- 6: plane Anschlagfläche der Werkzeugaufnahme (Pos. 2)
- 7: Plananlage des zylindrischen Bundes (Pos. 3)
- 8: Querbohrung (in Pos. 2 und Pos. 3)
- 9: Querbohrung (in Pos. 2 und Pos. 3)
- 10: Spannbolzen
- 11: Spannbolzen
- 12: Kegelabschnitt des Spannbolzens (Pos. 10)
- 13: Kegelabschnitt des Spannbolzens (Pos. 11)
- 14: Gewindeansatz des Spannbolzens (Pos. 10)
- 15: Gewindeansatz des Spannbolzens (Pos. 11)
- 16: Kegelbohrung im zylindrischen Bund (Pos. 3)
- 17: Kegelbohrung im zylindrischen Bund (Pos. 3)
- 18: Gewindebohrung in der Werkzeugaufnahme (Pos. 2 u. 8)
- 19: Gewindebohrung in der Werkzeugaufnahme (Pos. 2 u. 9)
- 20: Achse des Kegelabschnittes des Spannbolzens (Pos. 10)
- 21: Achse des Kegelabschnittes des Spannbolzens (Pos. 11)
- 22: Achse der Kegelbohrung (Pos. 16)
im zylindrischen Bund (Pos. 3)
- 23: Achse der Kegelbohrung (Pos. 17)
im zylindrischen Bund (Pos. 3)
- 24: Kegelwandung des Kegelabschnittes (Pos. 12)
des Spannbolzens (Pos. 10)
- 25: Kegelwandung des Kegelabschnittes (Pos. 13)
des Spannbolzens (Pos. 11)
- 26: abgewandte Planfläche des zylindrischen Bundes (Pos. 3)
- 27: Spalt
- 28: Maschinenspindel

## Patentansprüche

1. Werkzeugadapter zur lösbaren und austauschbaren Befestigung an Werkzeugmaschinen, wie Bohr-, Fräs-, oder dergleichen spanenden, wenigstens eine rotierende Arbeitsspindel aufweisenden Werkzeugmaschinen zur Aufnahme und Positionierung von spanenden Werkzeugen, wobei der Werkzeugadapter (1), bestehend aus einem Kegelabschnitt (4) und einem zylindrischen Bund (3) an einer Werkzeugaufnahme (2) befestigt wird und die Werkzeugaufnahme (2) vorzugsweise eine zentrale Bohrung (5) zur Kühlmittelzufuhr aufweist,
**dadurch gekennzeichnet, dass**
in dem Werkzeugadapter (1) in einem werkzeugseitig an den Kegelabschnitt (4) anschließenden zylindrischen Bund (3) vorzugsweise diametral einander gegenüberliegende Querbohrungen (8, 9) zur Aufnahme von Spannbolzen (10, 11) vorgesehen sind und, dass der zylindrische Bund (3) eine zu einem werkzeugseitigen Aufnahmebereich liegende und zu der Werkzeugaufnahme (2) zeigende Plananlage (7) aufweist.

2. Werkzeugadapter nach Anspruch 1,
**dadurch gekennzeichnet, dass**
mindestens zwei Querbohrungen (8, 9) symmetrisch am Umfang des zylindrischen Bundes (3) des Werkzeugadapters (1) angeordnet sind, die in der Werkzeugaufnahme (2) jeweils eine Gewindebohrung (18, 19) und eine jeweils daran anschließende, in den zylindrischen Bund (3) eingearbeitete Kegelbohrung (16, 17) aufweisen, zur Aufnahme der Spannbolzen (10, 11).

3. Werkzeugadapter nach Anspruch 1 und 2,
**dadurch gekennzeichnet, dass**
die Spannbolzen (10, 11) zur Befestigung in den Querbohrungen (8, 9) einen Gewindeansatz (14, 15) und einen Kegelabschnitt (12, 13) aufweisen.

4. Werkzeugadapter nach einem der Ansprüche 1 bis 3,
**dadurch gekennzeichnet, dass**
eine werkzeugseitige plane Anschlagfläche (6) der Werkzeugaufnahme (2) oder die zur Anschlagfläche (6) hin zeigende Plananlage (7) des Werkzeugadapters (1) mit einem Hohlschliff ausgebildet ist.

5. Werkzeugadapter nach einem der Ansprüche 1 bis 4,
**dadurch gekennzeichnet, dass**
die Achsen (20, 21) der Kegelabschnitte (12, 13) der Spannbolzen (10, 11) zu den Achsen der Kegelbohrungen (16, 17) im zylindrischen Bund (3) des Werkzeugadapters (1) bei Anlage der Plananlage (7) des zylindrischen Bundes (3) an der planen Anschlagfläche (6) der Werkzeugaufnahme (2) einen axial gerichteten Versatz aufweisen.

6. Werkzeugadapter nach einem der Ansprüche 1 bis 5,
**dadurch gekennzeichnet, dass**
zwischen einer zu der Plananlage (7) abgewandten Planfläche (26) des Bundes (3) und einer korrespondierenden inneren Fläche der Werkzeugaufnahme (2) ein Spalt (27) vorgesehen ist.

## Claims

1. Tool adapter for detachable and exchangeable fastening to tool machines, such as drilling, milling or like cutting tool machines, which have at least one rotating work spindle, for mounting and positioning of cutting tools, wherein the tool adapter (1), consisting of a cone section (4) and a cylindrical collar (3), is fastened to a tool mount (2) and the tool mount (2) preferably has a central bore (5) for coolant feed, **characterised in that** transverse bores (8, 9), which are preferably diametrically opposite, for reception of clamping pins (10, 11) are provided in the tool adapter (1) in a cylindrical collar (3) connected with the cone section (4) at the tool side and that the cylindrical collar (3) has a planar support (7) lying towards a mounting region at the tool side and facing towards the tool mount (2).

2. Tool adapter according to claim 1, **characterised in that** at least two transverse bores (8, 9) are arranged symmetrically at the circumference of the cylindrical collar (3) of the tool adapter (1) and each have in the tool mount (2) a respective threaded bore (18, 19) and a respective conical bore (16, 17), which is connected with the threaded bore and is formed in the cylindrical collar (3), for reception of the clamping pins (10, 11).

3. Tool adapter according to claim 1 and 2, **characterised in that** the clamping pins (10) have, for fastening in the transverse bores (8, 9), a threaded extension (14, 15) and a cone section (12, 13).

4. Tool adapter according to one of claims 1 to 3, **characterised in that** a planar abutment surface (6), which is at the tool side, of the tool mount (2) or the planar support (7), which faces towards the abutment surface (6), of the tool adapter (1) is formed with a ground cavity.

5. Tool adapter according to one of claims 1 to 4, **characterised in that** the axes (20, 21) of the cone sections (12, 13) of the clamping pins (10, 11) have an axially directed offset with respect to the axes of the conical bores (16, 17) in the cylindrical collar (3) of the tool adapter (1) when the planar support (7) of the cylindrical collar (3) is placed in contact with the planar abutment surface (6) of the tool mount (2).

6. Tool adapter according to one of claims 1 to 5, **characterised in that** a gap (27) is provided between a planar surface (26), which faces away from the planar support (7), of the collar (3) and a corresponding inner surface of the tool mount (2).

## Revendications

1. Adaptateur d'outil pour la fixation amovible et interchangeable à des machines-outils telles que des perceuses, des fraiseuses ou machines-outils similaires à enlèvement de copeaux, équipées d'au moins une broche rotative de travail, conçu pour la réception et le positionnement d'outils d'enlèvement de copeaux, ledit adaptateur d'outil (1), composé d'une région tronconique (4) et d'un collet cylindrique (3), étant fixé à un logement d'outillage (2), et ledit logement d'outillage (2) étant préférentiellement muni d'un alésage central (5) en vue de l'amenée d'un fluide de refroidissement,
**caractérisé par le fait que**
des perçages transversaux (8, 9), occupant de préférence des positions diamétralement opposées, sont prévus dans un collet cylindrique (3) se rattachant, côté outil, à ladite région tronconique (4), de manière à recevoir des pointeaux de serrage (10, 11); et **par le fait que** ledit collet cylindrique (3) comporte une zone plane de contact (7) proche d'une zone réceptrice située côté outil, et orientée vers le logement d'outillage (2).

2. Adaptateur d'outil, selon la revendication 1,
**caractérisé par le fait**
**qu'**au moins deux perçages transversaux (8, 9) pratiqués symétriquement sur le pourtour du collet cylindrique (3) dudit adaptateur d'outil (1) sont respectivement dotés, dans le logement d'outillage (2), d'un trou taraudé (18, 19) et d'un trou tronconique (16, 17) pratiqué dans ledit collet cylindrique (3) et directement adjacent au trou précité, en vue de recevoir les pointeaux de serrage (10, 11).

3. Adaptateur d'outil, selon les revendications 1 et 2,
**caractérisé par le fait que**
les pointeaux de serrage (10, 11) comprennent un embout fileté (14, 15) en vue de la fixation dans les perçages transversaux (8, 9), et une région tronconique (12, 13).

4. Adaptateur d'outil, selon l'une des revendications 1 à 3,
**caractérisé par le fait**
**qu'**une surface plane de butée (6) du logement d'outillage (2), située côté outil, ou bien la zone plane de contact (7) dudit adaptateur d'outil (1), orientée vers ladite surface de butée (6), est réalisée avec rectification en creux.

5. Adaptateur d'outil, selon l'une des revendications 1 à 4,
**caractérisé par le fait que**,
lorsque la zone plane de contact (7) du collet cylindrique (3) porte contre la surface plane de butée (6) du logement d'outillage (2), les axes (20, 21) des régions tronconiques (12, 13) des pointeaux de serrage (10, 11) accusent un décalage axial vis-à-vis des axes des trous tronconiques (16, 17) pratiqués dans ledit collet cylindrique (3) dudit adaptateur d'outil (1).

6. Adaptateur d'outil, selon l'une des revendications 1 à 5,
**caractérisé par le fait**
**qu'**un interstice (27) est réservé entre une surface plane (26) du collet (3), tournée à l'opposé de la zone plane de contact (7), et une surface intérieure concordante du logement d'outillage (2).
